# EUROPEAN PATENT SPECIFICATION

(11) **EP 3 184 493 B1**
(45) Date of publication and mention of the grant of the patent: **14.11.2018**
(21) Application number: 16206836.5
(22) Date of filing: 23.12.2016
(51) Int. Cl.: C03B 33/03, C03B 33/037, C03B 33/07

(54) **METHOD FOR CUTTING A GLASS SHEET**
VERFAHREN UM EINE GLASSCHEIBE ZU SCHNEIDEN
PROCÉDÉ DE DÉCOUPE D'UNE FEUILLE DE VERRE

(30) Priority: 24.12.2015 IT UB20159276
(43) Date of publication of application: 28.06.2017
(73) Proprietor: Bottero S.p.A., 12100 Cuneo (IT)
(72) Inventor: SPERANDIO, Marco, 12044 Centallo (IT); GHINAMO, Leonardo, 12100 Cuneo (IT)
(74) Representative: Lovino, Paolo

(56) References cited:
- EP-A1- 2 275 388
- EP-A1- 2 722 297
- EP-A1- 2 845 840
- ES-A1- 2 265 244

## Description

The present invention relates to a method for cutting a glass sheet.

In particular, the present invention relates to a method for cutting a glass sheet according to a predetermined sheet-cutting program.

It is known that for cutting a glass sheet, a cutting table is used having a supporting surface, a fixed cutting bridge with a single cutting head for cutting monolithic glass sheets or a dual cutting head for cutting laminated glass sheets; the glass sheet to be cut is fed below the cutting bridge and, after bringing it into abutment against a reference device, it is cut, providing a first crosspiece.

The crosspiece, if already finished, i.e. if it does not require further cutting, is moved away from the supporting surface. If, instead, it must be further cut, the remaining part of the sheet, from which the crosspiece has been separated, is retracted on an auxiliary supporting surface arranged upstream of the table and brought to a distance from the cutting station so as not to hinder the rotation and translation of the crosspiece on said supporting surface during the crosspiece cutting operations.

From patent application EP2196440A1 it is known that for reducing the overall dimensions of the machine, the remaining part of the sheet arranged on the auxiliary supporting surface is lifted or tilted, so as to allow for the insertion of at least part of the crosspiece below the raised front edge of the remaining part of the sheet during the rotation of said crosspiece.

Once the rotation is completed, the crosspiece is moved back and forth until the cutting of the crosspiece is finished. Once the cutting of the first crosspiece has been completed, the remaining part of the sheet is brought back onto the supporting surface of the table, fed forward again, after which a second crosspiece is cut, which is then processed, again by retracting or lifting the remaining part of the sheet, as for the first crosspiece. The same operations are repeated for all the crosspieces scheduled by the sheet-cutting program.

The cutting method described above is unsatisfactory for the following reasons.

Firstly, collisions can occur between the crosspiece that is rotated and the remaining part of the sheet that is lifted, if the two movements are not perfectly synchronized. In fact, during its rotation, the crosspiece protrudes upstream of the cutting station and fits in under the raised sheet.

In addition to this, the known cutting method described above makes it difficult to manage the sheet portions produced by cutting the crosspiece. In fact, these portions, as soon as they are produced, must be immediately moved away from the cutting table and/or the auxiliary surface, so as to allow the crosspiece to be cut to move back and forth in a free and safe manner.

Lastly, according to the known method described in the European patent mentioned above, each of the crosspieces is rotated by means of a rotating suction cup arranged upstream or downstream of the cutting bridge. If the subsequent back and forth feeding of the crosspiece is done without translating the suction cup, the crosspieces must be uncoupled from the suction cup itself and coupled to a longitudinal translation device, with the risk that, during the change operation, the references are lost or positioning errors occur, which then affect all the portions of the sheet obtained by cutting said crosspiece.

Lastly, the known method does not allow the cutting time to be reduced beyond certain values. In fact, the rotation of the crosspiece can be completed only after retracting and lifting the remaining part of the sheet.

Again, once the rotation is completed, the crosspiece is usually fed forward and retracted in order to carry out all the scheduled cuts, and these back and forth movements can generate errors, for example, with increased play in the mechanical transmissions of the machine.

Other machines and/or methods for cutting glass sheets are known, for example, from EP 2 275 388 A1, EP 2 722 297 A1, ES 2 265 244 A1 and EP 2 845 840 A1.

The object of the present invention is to provide a cutting method, different from the known cutting methods, which allows the problems described above to be solved in a simple and inexpensive way, and in particular, allows accurate cuts to be made with compact machines.

A further object of the present invention is to provide a method that, unlike the known methods, allows for increasing the production rate while avoiding delays in the cutting and removal of the crosspieces.

According to the present invention, a method for cutting a glass sheet is provided, as defined in claim 1.

The invention will now be described with reference to the accompanying drawings, which illustrate a nonlimiting embodiment thereof, in which:
Figure 1 illustrates schematically, and substantially in the block form, a machine for cutting glass sheets and the implementation of the method according to the present invention;
Figures 2 to 5 schematically illustrate a preferred sequence of sheet-cutting operations according to the present invention performed on the cutting machine of Figure 1; and
Figure 6 illustrates a further sheet-cutting step according to the present invention.

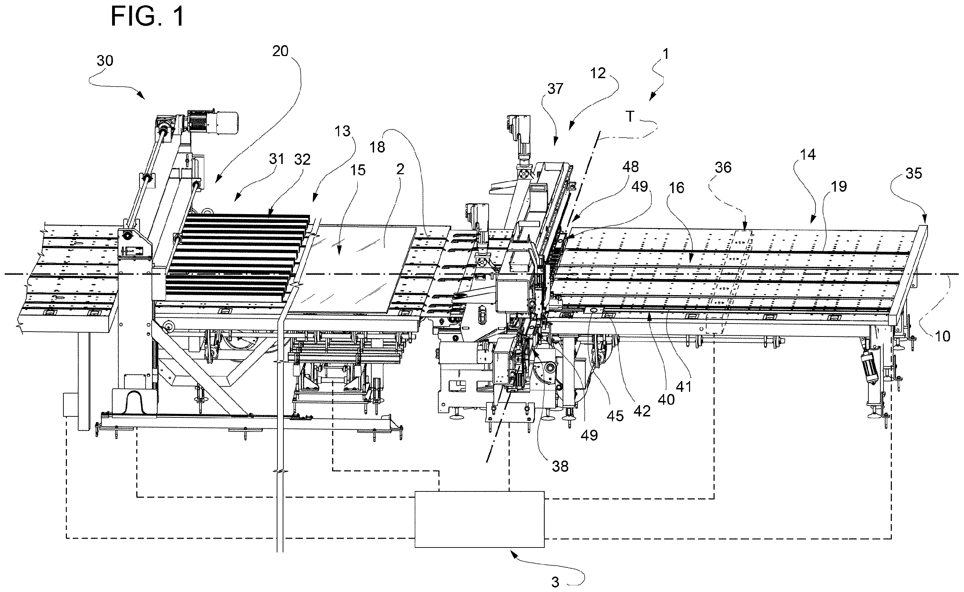

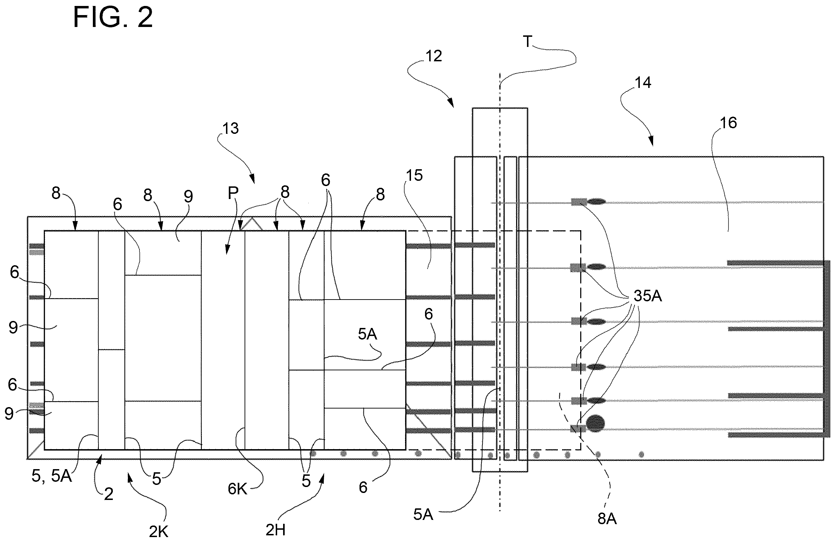

In figure 1, the number 1 indicates, as a whole, a machine for cutting a laminated glass sheet 2 according to a cutting program P stored in a control unit 3 of the machine 1. As shown in Figure 2, the cutting program P comprises a plurality of first transverse cut lines 5, parallel to each other, so as to divide the sheet 2 into a plurality of crosspieces 8, and for at least one of the crosspieces, designated by the reference numeral 8A, it comprises at least two cut lines 6, which are orthogonal to the lines 5, so as to divide the crosspiece 8A into at least three sheet pieces 9. However, cutting programs different from the one shown in the accompanying figures can be implemented in order to vary the geometry and/or surface of the crosspieces 8 and pieces 9.

In any case, with reference to Figure 1, the machine 1 comprises, aligned in a longitudinal direction 10, a fixed sheet-cutting station 12, an upstream table 13 and a downstream table 14 arranged, respectively, upstream and downstream of the station 12.

The tables 13 and 14 have respective horizontal supporting surfaces, indicated as 15 and 16, which are parallel and substantially flush with one another. The tables 13 and 14 are provided with respective sheet feed devices, known per se, advantageously of the belt type, indicated as 18 and 19.

Again, with reference to Figure 1, the machine 1 also comprises a sheet-lifting unit 20 associated with the upstream table 13 to lift the sheet 2 or segments thereof from the supporting surface 15.

Preferably, the lifting unit 20 comprises a translating structure 29, which is movable in opposite directions along direction 10 to and from the station 12 under the thrust of a motorized device 30. Preferably, the structure 29 is movable on wheels rolling on floor guides. Alternatively, according to a variation not shown, the structure 29 has wheels movable on guides which are integrally connected to a fixed structure of the table 13. The structure 29 comprises a fork- or comb-like element 31 having a free end facing the station 12 and defining a sheet supporting surface 32. The fork-like element 31 is coupled to the structure 29 so as to translate vertically with respect to the structure 29 and the supporting surface 15 between a raised position, illustrated in Figure 1, and a lowered position. When arranged in the lowered position, the fork 31 is housed inside the table 13 so that its supporting surface 32 is arranged below, or flush with, the supporting surface 15. Instead, when it is arranged in its raised position, the fork 31 is spaced from the supporting surface 15 by an amount sufficient to allow glass sheets or pieces to pass over and/or lie on said supporting surface 15.

Alternatively, according to a variation not shown, the fork 31 extends above the supporting surface 15 even when arranged in its lowered position, and the table 13 comprises a sheet-lifting device having a plurality of vertical motorized struts, which are movable between a lowered position, in which they extend below the supporting surface 15, and a raised position, in which they project above said supporting plane 15 through respective openings formed in the supporting surface 15. When arranged in their raised position, the struts allow for the insertion of the fork 31 below the sheet 2, whereas they leave the area below the fork 31 free when arranged in their lowered position.

Again, with reference to Figure 1, the machine 1 further comprises a motorised bridge 35 for sheet abutment, known per se, associated with the downstream table 14 and movable with respect to the downstream table 14 in the longitudinal direction 10 between two extreme end-stop longitudinal positions, one of which retracted and adjacent to the station 12, i.e. in the vicinity of a first end of the supporting surface 16, and the other spaced from said station 12. In the latter position, the abutment bridge 35 is arranged at a second longitudinal end of the supporting surface 16, as shown in Figure 1. The abutment bridge 35 can be arranged above the supporting surface 16, as in Figure 1, or be arranged below the supporting surface 16.

The downstream table 14 is then coupled to a sheet-movement device 36. The device 36 is independent of, or preferably carried by, the abutment bridge 35, is also known per se and not described in detail, is schematically illustrated, is advantageously of the suction cup type, and is motorised and controlled by the unit 3 to be moved in opposite directions along direction 10 and beneath the supporting surface 16. Alternatively, or in combination with the suction cups, the device 36 comprises a plurality of retractable plugs 35A (Figure 2), carried by the abutment bridge 35 and movable between a substantially vertical position, wherein they define a stop shoulder and/or a thrust element for a front edge of the glass sheets that are arranged on the supporting surface 16, and a lowered or retracted position, in which they leave free space for any movement of the glass on the supporting surface 16.

Again, with reference to Figure 1, the station 12 houses a cutting bridge 37 known per se and comprising a single cutting head for cutting monolithic glass sheets 2 or two facing cutting heads, as in the example described, for cutting laminated glass sheets 2, i.e. comprising two lateral glass sheets and one layer of intermediate thermoplastic material. In any case, the cutting head or heads are carried by respective motorised carriages 38, only one of which is visible in Figure 1.

The carriages 38 are movable in opposite directions along a cutting direction T orthogonal to direction 10 and extending between the two supporting surfaces 15 and 16.

Again, with reference to Figure 1, the table 14 supports a guide and slide assembly 40, comprising, in turn, a fixed rectilinear guide 41, which is arranged adjacent to a side of the table 14, parallel to direction 10.

The assembly 40 also comprises a motorised carriage 42 coupled to the guide 41 and movable in opposite directions along said guide 41 under the control of the unit 3. The carriage 42 carries a device 44 for gripping and holding the crosspieces 8. Conveniently, the device 44 comprises a suction cup or a clamp unit 45 coupled to the carriage 42 so that it can rotate about a hinge axis orthogonal to the supporting surface 16.

The device 45 forms part of a unit 48 for the rotation of the crosspieces 8, known per se, which also comprises a further gripping and holding device 49, again of the suction cup or clamp type, or with presser members, coupled to one or both carriages 38 so that it can rotate about a hinge axis orthogonal to the supporting surface 16.

The operation of the machine 1 will now be described starting from a condition in which a sheet 2 is arranged on the table 13 (Figure 2), the structure 29 is arranged in its retracted position, the fork 31 is arranged in its raised position and the abutment bridge 35 is arranged in its advanced position at the end of the supporting surface 16 longitudinally opposite to that adjacent to the station 12.

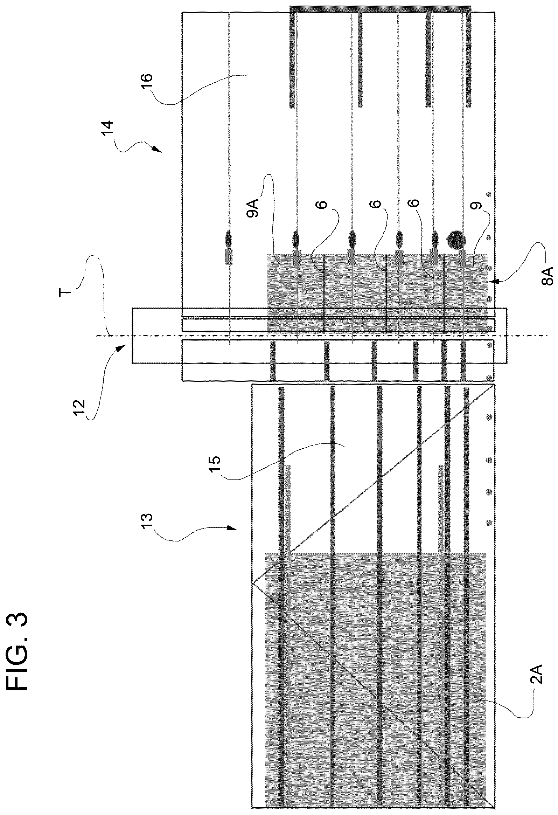

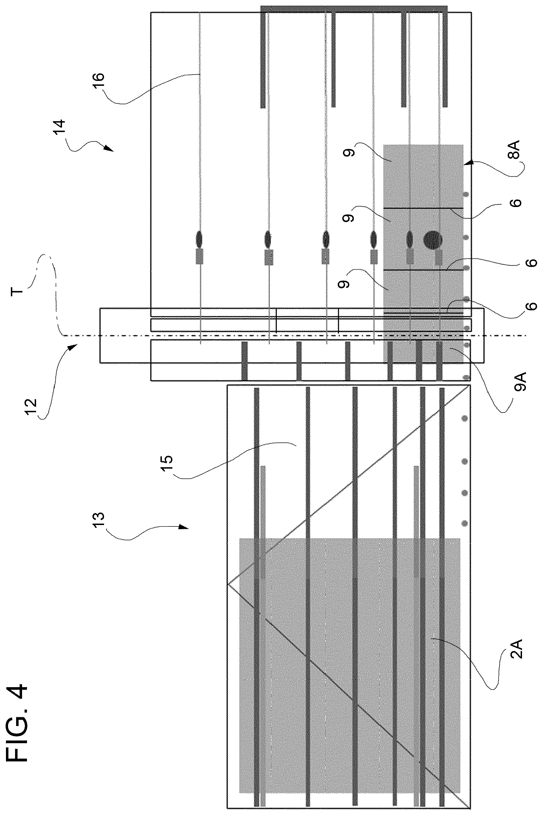

Starting from this condition, the sheet 2 is fed onto the supporting surface 15 and through the station 12 until it abuts against the plugs 35A of the abutment bridge 35, which has been previously retracted and arranged in a reference position such that the first cut line 5A coincides with the cut line T, as shown by a dashed line in Figure 2. At this point, the sheet 2 is cut along the line 5A and the crosspiece 8A is formed (Figures 2 and 3). After cutting the crosspiece 8A, the remaining part of the sheet 2A is retracted on the supporting surface 15 so as to space it from the cutting line T, as shown in Figure 3. Then, while firmly keeping the remaining part of the sheet 2A resting on the supporting surface 15, the crosspiece 8A is coupled to the gripping devices 45 and 49 and rotated 90° anticlockwise (Figure 3) on the supporting surface 16 by combining the translation of devices 45 and 49 in direction 10 towards the abutment bridge 35 and, respectively, in a direction parallel to the cut line T (Figure 4) towards the side of the table 14 carrying the guide 41.

The crosspiece 8A is rotated 90°, keeping all the lines 6, to be subsequently made, downstream of the cut line T during the whole rotation. In one embodiment, the crosspiece 8A rotates without ever crossing the line T, i.e. always remaining on the supporting surface 16 and without ever crossing the station 12 and affecting the supporting surface 15. In another embodiment, a small part of the crosspiece 8A, indicated by the reference number 9A, projects beyond the cut line T, thereby extending on the supporting surface 15, during and/or at the end of the rotation.

During rotation of the crosspiece 8A, the remaining part of the sheet 2A is maintained either resting on the supporting surface 15, or raised from said supporting surface 15. In fact, the position of the remaining part of the sheet 2A is slightly retracted with respect to the cut line T and is sufficient to avoid any interference or collision with the portion 9A even if the remaining part of the sheet 2A remains lowered.

Before, after or during the rotation of the crosspiece 8A, the remaining part of the sheet 2A is raised. In particular, the fork 31 is lowered, bringing its supporting surface 32 below the supporting surface 15, and the structure 29 is fed towards the station 12, thereby inserting said fork 31 beneath the remaining part of the sheet 2A. Thereafter the fork 31 is lifted, spacing the remaining part of the sheet 2A from the supporting surface 15 and setting the fork 31 to a distance from the supporting surface 15 greater than the thickness of the crosspiece 8A to be cut.

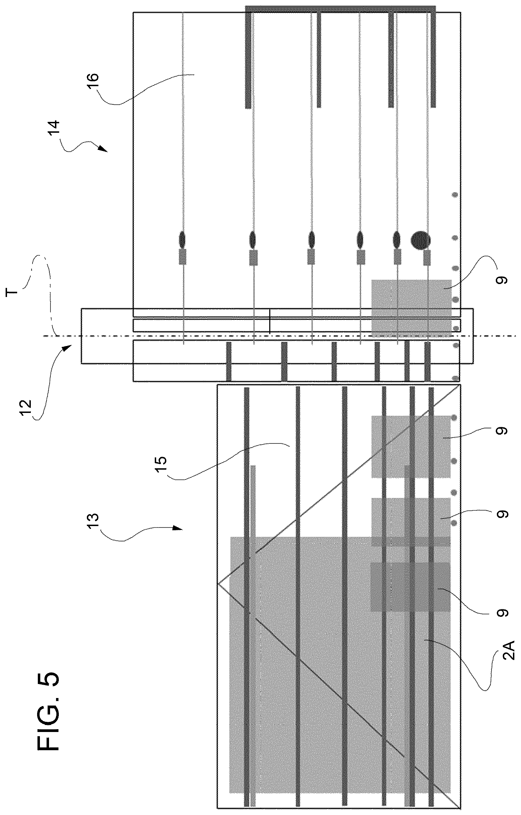

Upon completion of the lifting and rotation steps, the crosspiece 8A is uncoupled from the device 49, retained by the device 45, and fed by the assembly 40 or the device 36 towards the station 12 and the crosspiece 8A itself is progressively cut along the lines 6, providing a succession of pieces 9 (Figure 5).

According to a different operating mode, if the machine is provided with belts and/or suction cups for the forward movement in the longitudinal direction to and from the station 12, the movement of the crosspiece 8A may be carried out by using the belts and/or suction cups in combination with the feed systems described above or with the belts or suction cups alone.

Upon cutting, the pieces 9 are moved on the supporting surface 15, while resting on the latter, and inserted below the remaining part of the sheet 2A which had previously been raised, as illustrated in Figure 5. The space comprised between the supporting surface 15 and the remaining part of the sheet 2A therefore defines a temporary storage or a temporary parking area for the pieces 9.

Preferably, the retraction of the crosspiece 8A towards the station 12 and the supporting surface 15 ends when the last line 6 is formed, to separate the second-last and last pieces 9 from one another. In this operating condition, in particular, the last piece 9 is still arranged on the supporting surface 16, whereas the second-last piece 9 is arranged on the supporting surface 15, optionally beneath the front edge of the remaining part of the sheet 2A, while the other previously formed pieces 9 are arranged in a row beneath the remaining part of the sheet 2A.

The pieces 9 are removed from the temporary storage only upon completion of the cutting of the crosspiece 8A along all the lines 6. The pieces 9 are removed towards an output of the machine 1, at the opposite longitudinal end with respect to the input where the sheet 2 was initially loaded on the table 13. In this removal step, the pieces 9 are fed in a line, one after the other along the direction 10, in the direction running from the supporting surface 15 towards the supporting surface 16, in a reverse order with respect to that in which the pieces 9 were formed by cutting the crosspiece 8A along the lines 6. In other words, this temporary storage follows a logic of the l.i.f.o. ("last in, first out") type. In this way, it is possible to form a train of segments 9, which are passed continuously through the station 12 towards the output (on the right in Figure 1) and unloaded from the machine 1 through said output one after the other in a row.

In other words, all the pieces 9, which formed the crosspiece 8A, are unloaded in the direction of the output in a sequential and uninterrupted manner. In particular, if a manual operation above the supporting surface 15 of an operator is needed to unload the glass through the output of the machine 1, this operator works with continuity, without substantial breaks, on the whole train of the pieces 9 that were formed, which arrive from the station 12.

In the event that at least one of the segments 9 must be further rotated and cut according to what is scheduled in the cutting program P, to get even smaller pieces, according to a preferred embodiment, the additional rotation, positioning and cutting steps are performed during transfer of this segment 9 towards the supporting surface 16 and said output of the machine 1. At the same time, the segments 9 that are arranged behind, in a row, on the supporting surface 15, wait for their transfer and unloading until the further rotation, positioning and cutting operations on the preceding segment 9 are completed.

Regardless of whether or not the pieces 9 are further rotated and cut during their transfer towards the supporting surface 16 and the output of the machine 1, the unloading is performed entirely after all the lines 6 have been made in an automated manner, i.e. without the need for intervention and, therefore, without the need for a continuous presence of an operator, whose work times are therefore optimised.

According to a variant, after the cutting along all the lines 6 has been completed, the pieces 9 are removed in the direction of an output of the machine 1 which coincides with the input where the sheet 2 was initially loaded on the table 13 (on the left in Figure 1). The pieces 9 are fed longitudinally in a line, i.e. one after the other, in the direction running from the supporting surface 16 towards the supporting surface 15, in the same order as that in which the pieces 9 were formed by cutting the crosspiece 8A along the lines 6. Therefore, this temporary storage follows a logic of the f.i.f.o. ("first in, first out") type. In this case too, the operator in charge of the manual unloading works with continuity, without substantial breaks, on the whole train or line of pieces 9 which are removed from the temporary storage.

Once the removal of the pieces 9 from the temporary storage is completed, the fork 31 is lowered and the remaining part of the sheet 2a is rested again on the supporting surface 15, after which it is again fed towards the station 12 and the steps described above are repeated for all the crosspieces 8 scheduled in the cutting program P.

According to a different operating mode, before cutting the crosspiece 8A, the sheet 2 is divided into two sheets conveniently having comparable lengths. In this case, the sheet 2 is cut along the line 5K, obtaining two smaller sheets, indicated as 2H and 2K.

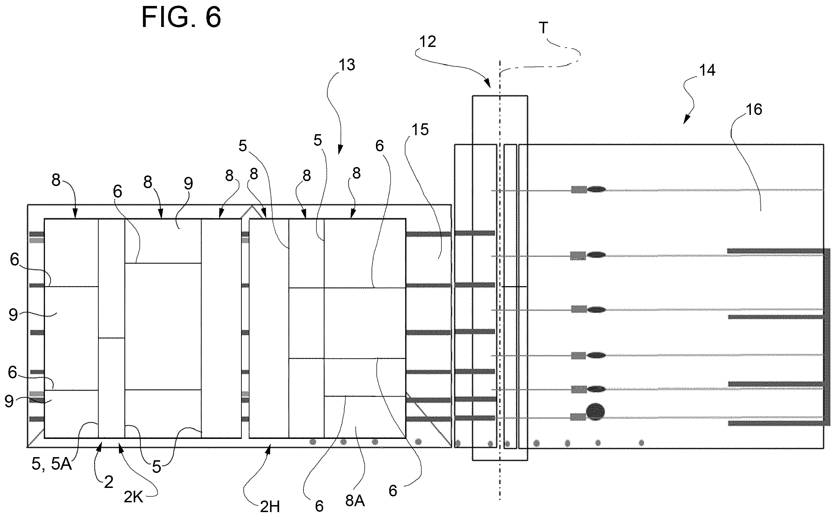

Once the cutting of the sheet 2 along the line 5K is completed, both smaller sheets 2H, 2K are put back on the supporting surface 15 and arranged almost flush with one another, as shown in Figure 6, after which the crosspiece 8A is cut from the smaller sheet 2K as previously described, feeding and retracting the two smaller sheets 2H, 2K together.

From the foregoing, it appears that the cutting methods described above allow even sizeable sheets to be safely cut on machines of reduced dimensions, especially in length, compared to known solutions.

The foregoing is mainly due to the fact that the rotation of the crosspiece 8A is carried out while keeping most of the crosspiece 8A above the supporting surface 16, whereas only a small portion 9A of the crosspiece 8A invades the space upstream of the cut line T. The remaining part of the sheet 2A can therefore be retracted by a relatively small amount with respect to the cut line T and be arranged in a position in which a front edge of the remaining part of the sheet 2A is arranged in the vicinity of the cut line T, without the occurrence of collisions with the crosspiece 8A during its rotation.

In turn, keeping the remaining part of the sheet 2A close to the cut line T allows the length of the table 13 to be reduced compared to known solutions.

In addition, the cutting methods described above allow for obtaining articles constant in shape and size. The foregoing is also attributable to the fact that each crosspiece 8 is rotated and then cut without uncoupling it from the device 40, and therefore, the original sheet references set by the abutment bridge 35 are maintained.

In all cases, the crosspiece 8A is cut along the lines 6 by retracting the crosspiece 8A through the station 12, again in one direction only, i.e. back towards the supporting surface 15 with successive retraction steps, each performed for arranging the crosspiece 8A in the station 12 in a position such as to make the cut line T coincide with the line 6 that must be formed each time. Therefore, the first of these retraction steps is performed after the rotation of the crosspiece 8A, and each of the other retraction steps after the preceding line 6 has been formed. In this way, the errors due to machine wear are restricted and a train of segments 9 is formed, which are arranged upstream of the station 12 and are moved downstream, i.e. towards the supporting surface 16, one after the other in succession, only when the cutting of the crosspiece 8A is completed. In this way, the overall cutting time can be reduced compared to known methods.

According to one embodiment, during the cutting step to accomplish the lines 6 and make the pieces 9, each retraction step is performed by pushing a front edge of the crosspiece 8A by means of the plugs 35A of the abutment bridge 35. In this case too, the positioning accuracy is high since the reference system is defined by the abutment bridge 35 and remains the same for each of the lines 6.

The references given by the abutment bridge 35 are then also maintained by the remaining part of the sheet 2A, which is simply raised and lowered keeping it parallel to itself, in the same axial and transverse positions, without the need to provide dedicated sheet-retaining devices.

Lastly, it was found experimentally that dividing the sheet 2 into two smaller sheets before starting to cut the crosspieces 8 allows for the correct abutment of sheets of any size.

However, from the foregoing it appears that, in some cases, the remaining part of the sheet 2A may be only partially raised, for example by lifting the front edge alone or the front edge higher than a rear edge, but always with the aim to provide a storage for the temporary housing of the segments 9 directly on the supporting surface 15, and always so as to disengage the feed device 18, which is used to remove the segments 9, which have just been formed, from the cut line T and place them beneath the remaining part of the sheet 2A. The presence of the temporary storage allows for increasing the production rate, in that it avoids delays in the cutting and removal of the pieces 9.

Since the front edge of the remaining part of the sheet 2A is arranged practically adjacent to the station 12 regardless of the geometry and/or the size of the portions 9, the travelling times of the remaining part of the sheet 2A to and from the cut line T are significantly reduced, especially in the presence of a high number of crosspieces 8.

In relation to the lifting of the remaining part of the sheet 2A from the supporting surface 15, it is obvious that lifting devices other than the device 20 described by way of example may be provided, for example to simplify the machine from a constructional point of view or to lower its costs.

## Claims

1. A cutting method for cutting a glass sheet (2) according to a cutting program (P) comprising:
- a plurality of first cut lines (5) which are parallel to each other, to separate one or more crosspieces (8A) from a remaining part of the sheet (2A), and
- at least two second cut lines (6), orthogonal to said first cut lines (5), to divide one of said crosspieces (8A) into at least three pieces (9);
the method being implemented by means of a cutting machine comprising:
- a sheet supporting surface (15,16),
- feed means for feeding the sheet in a longitudinal direction (10) and
- a cutting station (12), which is fixed and houses sheet-cutting means running along a cutting path (T), which is orthogonal to said feed direction (10), and divides the supporting surface into an upstream supporting area (15) and a downstream supporting area (16) ;
the method comprising the steps of:
- arranging a sheet to be cut (2) on the upstream supporting area (15);
- feeding the sheet to be cut (2) in the longitudinal direction (10) through said cutting station (12);
- positioning the sheet to be cut (2) in the cutting station (2) and cutting it along a first cut line (5) so as to obtain the crosspiece (8A);
- retracting the remaining part of the sheet (2), which is arranged on the upstream supporting area (15), so as to space the remaining part of the sheet (2) from said cutting path (T);
- rotating the crosspiece (8A) about an axis orthogonal to said supporting surface after the retraction of the remaining part of the sheet (2A);
- cutting the crosspiece (8A) after the rotation so as to form the second cut lines (6), thus forming said sheet pieces (9);
- lifting from said upstream supporting area (15) at least a front edge of the remaining part of the sheet (2A), which is adjacent to said cutting station (12), before the crosspiece (8A) cutting step;
**characterised in that**:
- the rotation of the crosspiece (8A) is carried out so as to keep all of the second cut lines (6), which should then be made, on the downstream supporting area (16) ;
- during said cutting step, the crosspiece (8A) is progressively retracted through the cutting station (12) towards the upstream supporting area (15);
- during said cutting step, at least one of the sheet pieces (9) is inserted and temporarily stored beneath the remaining part of the sheet (2A);
- the sheet pieces (9) are removed from the upstream supporting area (15) after the cutting along the second cut lines (6) has been completed.

2. The method according to claim 1, **characterized in that** the crosspiece (8A) cutting step is performed by moving the crosspiece (8A) always in a single direction, that runs from the downstream supporting area (16) towards the upstream supporting area (15).

3. The method according to claim 1 or 2, **characterized in that** said sheet pieces (9) are removed by feeding them in a line in a feed direction that runs from the upstream supporting area (15) towards the downstream supporting area (16).

4. The method according to claim 1 or 2, **characterized in that** said sheet pieces (9) are removed by feeding them in a line in a feed direction that runs from the downstream supporting area (16) towards the upstream supporting area (15).

5. A method according to any one of the preceding claims, **characterized in that**, after the removal of the sheet pieces (9), the remaining part of the sheet (2A) is lowered onto the upstream supporting surface (15) and then fed through the cutting station (12) towards the downstream supporting area (16).

6. A method according to any one of the preceding claims, **characterized in that** the remaining part of the sheet (2A) rests on the upstream supporting area (15) during the rotation of the crosspiece (8A) and is lifted after the rotation of the crosspiece (8A).

7. A method according to any one of claims 1 to 5, **characterized in that** the remaining part of the sheet (2A) is lifted before the rotation of the crosspiece (8A).

8. A method according to any one of the preceding claims, **characterized in that** the retraction of the crosspiece (8A) is carried out by pushing a front edge of the crosspiece (8A) towards the upstream supporting area (15) by means of plugs (35A) which are carried by an abutment bridge (35) of the machine and are part of said feed means.

9. A method according to any one of the preceding claims, **characterized in that**, during the lifting, the remaining part of the sheet (2A) remains parallel to itself and to the upstream supporting area (15).

10. A method according to any one of claims 1 to 8, **characterized in that** the remaining part of the sheet (2A) is lifted from the upstream supporting area (15) by lifting said front edge higher than other portions of the sheet.

11. The method according to claim 3, **characterized in that** the sheet pieces (9), during the removal from the upstream supporting area (15), are fed one after the other through the cutting station (12) without further processing.

12. The method according to claim 3, **characterized in that** at least one of said sheet pieces (9), during the removal from the upstream supporting area (15), is rotated and positioned in the cutting station (12) so as to perform a further cut line provided for in the cutting program (P).

## Patentansprüche

1. Schneidverfahren zum Schneiden einer Glasplatte (2) entsprechend einem Schneidprogramm (P), umfassend:
- mehrere parallel zueinander verlaufende erste Schneidlinien (5) zum Trennen eines oder mehrerer Querstücke (8A) von einem verbleibenden Teil der Platte (2A), und
- mehrere orthogonal zu den ersten Schneidlinien (5) verlaufende zweite Schneidlinien (6) zum Unterteilen eines der Querstücke (8A) in mindestens drei Stücke (9);
wobei das Verfahren implementiert wird mittels einer Schneidmachine, die aufweist:
- eine Plattenhaltefläche (15,16),
- eine Zuführvorrichtung zum Zuführen der Platte in einer Längsrichtung (10), und
- eine Schneidstation (12), die festgelegt ist und Plattenschneidvorrichtungen enthält, welche entlang eines Schneidwegs (T) verlaufen, der sich orthogonal zu der Zuführrichtung (10) erstreckt, und die die Haltefläche in einen stromaufwärtigen Haltebereich (15) und einen stromabwärtigen Haltebereich (16) unterteilt;
wobei das Verfahren die Schritte umfasst:
- Anordnen einer zu schneidenden Platte (2) auf dem stromaufwärtigen Haltebereich (15);
- Zuführen der zu schneidenden Platte (2) in der Längsrichtung (10) durch die Schneidstation (12);
- Positionieren der zu schneidenden Platte (2) in der Schneidstation (12) und Schneiden der Platte entlang einer ersten Schneidlinie (5) zum Bilden des Querstücks (8A);
- Zurückziehen des verbleibenden Teils der Platte (2), der in dem stromaufwärtigen Haltebereich (15) angeordnet ist, um den verbleibenden Teil der Platte (2) von dem Schneidweg (T) zu beabstanden;
- Drehen des Querstücks (8A) um eine orthogonal zu der Haltefläche verlaufende Achse nach dem Zurückziehen des verbleibenden Teils der Platte (2A);
- Schneiden des Querstücks (8A) nach der Drehung, um die zweiten Schneidlinien (6) zu bilden, wodurch die Plattenstücke (9) gebildet werden;
- vor dem Schritt des Schneidens der Querstücks (8A), Abheben mindestens eines Vorderrands des verbleibenden Teils der Platte (2A), der angrenzend an die Schneidstation (12) angeordnet ist, von dem stromaufwärtigen Haltebereich (15),
**dadurch gekennzeichnet, dass**
- die Drehung des Querstücks (8A) derart ausgeführt wird, dass sämtliche zweite Schneidlinien (6), die gezogen werden sollen, an dem stromabwärtigen Haltebereich (16) gehalten werden;
- während des Schneidschritts das Querstück (8A) progressiv durch die Schneidstation (12) hindurch zu dem stromaufwärtigen Haltebereich (15) hin zurückgezogen wird;
- während des Schneidschritts mindestens eines der Plattenstücke (9) unter den verbleibenden Teil der Platte (2A) eingeführt und dort vorübergehend gelagert wird;
- die Plattenstücke (9) aus dem stromaufwärtigen Haltebereich (15) entfernt werden, nachdem das Schneiden entlang der zweiten Schneidlinien (6) abgeschlossen worden ist.

2. Verfahren nach Anspruch 1, **dadurch gekennzeichnet, dass** der Schritt des Schneidens des Querstücks (8A) durchgeführt wird, indem das Querstück (8A) stets in einer einzigen Richtung bewegt wird, die von dem stromabwärtigen Haltebereich (16) zu dem stromaufwärtigen Haltebereich (15) hin verläuft.

3. Verfahren nach Anspruch 1 oder 2, **dadurch gekennzeichnet, dass** die Plattenstücke (9) entfernt werden, indem sie in einer Linie in einer Zuführrichtung zugeführt werden, die von dem stromaufwärtigen Haltebereich (15) zu dem stromabwärtigen Haltebereich (16) hin verläuft.

4. Verfahren nach Anspruch 1 oder 2, **dadurch gekennzeichnet, dass** die Plattenstücke (9) entfernt werden, indem sie in einer Linie in einer Zuführrichtung zugeführt werden, die von dem stromabwärtigen Haltebereich (16) zu dem stromaufwärtigen Haltebereich (15) hin verläuft.

5. Verfahren nach einem der vorhergehenden Ansprüche, **dadurch gekennzeichnet, dass** nach dem Entfernen der Plattenstücke (9) der verbleibende Teil der Platte (2A) auf den stromaufwärtigen Haltebereich (15) abgesenkt wird und dann durch die Schneidstation (12) hindurch dem stromabwärtigen Haltebereich (16) zugeführt wird.

6. Verfahren nach einem der vorhergehenden Ansprüche, **dadurch gekennzeichnet, dass** der verbleibende Teil der Platte (2A) während der Drehung des Querstücks (8A) auf dem stromaufwärtigen Haltebereich (15) ruht und nach der Drehung des Querstücks (8A) angehoben wird.

7. Verfahren nach einem der Ansprüche 1 bis 5, **dadurch gekennzeichnet, dass** der verbleibende Teil der Platte (2A) vor der Drehung des Querstücks (8A) angehoben wird.

8. Verfahren nach einem der vorhergehenden Ansprüche, **dadurch gekennzeichnet, dass** das Zurückziehen des Querstücks (8A) ausgeführt wird, indem ein vorderer Rand des Querstücks (8A) mittels Stiften (35A), die von einer Anlagebrücke (35) der Maschine gehalten sind und Teil der Zuführvorrichtung sind, zu dem stromaufwärtigen Haltebereich (15) hin gedrückt wird.

9. Verfahren nach einem der vorhergehenden Ansprüche, **dadurch gekennzeichnet, dass** während des Anhebens der verbleibende Teil der Platte (2A) zu sich selbst und zu dem stromaufwärtigen Haltebereich (15) parallel bleibt.

10. Verfahren nach einem der Ansprüche 1 bis 8, **dadurch gekennzeichnet, dass** der verbleibende Teil der Platte (2A) von dem stromaufwärtigen Haltebereich (15) abgehoben wird, indem der vordere Rand höher angehoben wird als die anderen Bereiche der Platte.

11. Verfahren nach Anspruch 3, **dadurch gekennzeichnet, dass** während des Anhebens von dem stromaufwärtigen Haltebereich (15) die Plattenstücke (9) nacheinander durch die Schneidstation (12) hindurchbewegt werden, ohne weiter bearbeitet zu werden.

12. Verfahren nach Anspruch 3, **dadurch gekennzeichnet, dass** während des Anhebens von dem stromaufwärtigen Haltebereich (15) mindestens eines der Plattenstücke (9) gedreht und in der Schneidstation (12) positioniert wird, um eine weitere in dem Schneidprogramm (P) vorgesehene Schneidlinie auszuführen.

## Revendications

1. Procédé de coupe pour couper une feuille de verre (2) selon un programme de coupe (P) comprenant:
- une pluralité de premières lignes de coupe (5) qui sont parallèles les unes aux autres, pour séparer une ou plusieurs traverses (8A) d'une partie restante de la feuille (2A), et
- au moins deux secondes lignes de coupe (6), orthogonales auxdites premières lignes de coupe (5), pour diviser l'une desdites traverses (8A) en au moins trois morceaux (9);
le procédé étant mis en oeuvre au moyen d'une machine de découpe comprenant :
- une surface de support de feuille (15, 16),
- des moyens d'alimentation pour amener la feuille dans une direction longitudinale (10) et
- une station de découpe (12), qui est fixe et abrite des moyens de coupe de feuilles s'étendant le long d'une trajectoire de coupe (T), qui est orthogonal à ladite direction d'alimentation (10), et divise la surface de support en une zone de support en amont (15) et une zone de support en aval (16) ;
le procédé comprenant les étapes consistant à :
- disposer une feuille à couper (2) sur la zone de support en amont (15) ;
- alimenter la feuille à couper (2) dans la direction longitudinale (10) à travers ladite station de découpe (12) ;
- positionner la feuille à couper (2) dans la station de découpe (12) et la couper le long d'une première ligne de coupe (5) afin d'obtenir la traverse (8A) ;
- rétracter la partie restante de la feuille (2), qui est agencée sur la zone de support en amont (15), de manière à espacer la partie restante de la feuille (2) de ladite trajectoire de coupe (T) ;
- faire tourner la traverse (8A) autour d'un axe orthogonal à ladite surface d'appui après la rétraction de la partie restante de la feuille (2A) ;
- couper la traverse (8A) après la rotation de façon à former les secondes lignes de coupe (6), formant ainsi lesdits morceaux de feuille (9) ;
- soulever depuis ladite zone de support en amont (15) au moins un bord avant de la partie restante de la feuille (2A), qui est adjacent à ladite station de découpe (12), avant l'étape de coupe de la traverse (8A) ;
**caractérisé en ce que** :
- la rotation de la traverse (8A) est réalisée de manière à garder toutes les secondes lignes de coupe (6), qui devrait alors être faites, sur la zone de support en aval (16) ;
- pendant ladite étape de coupe, la traverse (8A) est progressivement rétractée à travers la station de découpe (12) vers la zone de support en amont (15) ;
- au cours de ladite étape de coupe, au moins un des morceaux de feuilles (9) est inséré et stocké temporairement sous la partie restante de la feuille (2A) ;
- les morceaux de feuille (9) sont retirés de la zone de support en amont (15) après que la coupe le long des secondes lignes de coupe (6) ait été achevée.

2. Procédé selon la revendication 1, **caractérisé en ce que** l'étape de coupe de la traverse (8A) est réalisée en déplaçant la traverse (8A) toujours dans une seule direction, qui part de la zone de support en aval (16) vers la zone de support en amont (15).

3. Procédé selon la revendication 1 ou 2, **caractérisé en ce que** lesdits morceaux de feuille (9) sont enlevés en les alimentant dans une ligne dans une direction d'alimentation qui part de la zone de support en amont (15) vers la zone de support en aval (16).

4. Procédé selon la revendication 1 ou 2, **caractérisé en ce que** lesdits morceaux de feuille (9) sont enlevés en les alimentant dans une ligne dans une direction d'alimentation qui part de la zone de support en aval (16) vers la zone de support en amont (15).

5. Procédé selon l'une quelconque des revendications précédentes, **caractérisé en ce que**, après l'enlèvement des morceaux de feuille (9), la partie restante de la feuille (2A) est abaissée sur la surface de support en amont (15) puis amenée par la station de coupe (12) vers la zone de support en aval (16).

6. Procédé selon l'une quelconque des revendications précédentes, **caractérisé en ce que** la partie restante de la feuille (2A) repose sur la zone de support en amont (15) pendant la rotation de la traverse (8A) et est soulevée après la rotation de la traverse (8A).

7. Procédé selon l'une quelconque des revendications 1 à 5, **caractérisé en ce que** la partie restante de la feuille (2A) est soulevée avant la rotation de la traverse (8A).

8. Procédé selon l'une quelconque des revendications précédentes, **caractérisé en ce que** la rétractation de la traverse (8A) est réalisée en poussant un bord avant de la traverse (8A) vers la zone de support en amont (15) au moyen de bouchons (35A) qui sont portés par un pont de butée (35) de la machine et font partie desdits moyens d'alimentation.

9. Procédé selon l'une quelconque des revendications précédentes, **caractérisé en ce que**, pendant le levage, la partie restante de la feuille (2A) reste parallèle à elle-même et à la zone de support en amont (15).

10. Procédé selon l'une quelconque des revendications 1 à 8, **caractérisé en ce que** la partie restante de la feuille (2A) est soulevée de la zone de support en amont (15) en soulevant ledit bord avant plus haut que les autres parties de la feuille.

11. Procédé selon la revendication 3, **caractérisé en ce que** les morceaux de feuilles (9), pendant le retrait de la zone de support en amont (15), sont acheminés l'un après l'autre à travers la station de coupe (12) sans traitement ultérieur.

12. Procédé selon la revendication 3, **caractérisé en ce qu'**au moins un desdits morceaux de feuille (9), pendant le retrait de la zone de support en amont (15), est tourné et positionné dans la station de coupe (12) de manière à effectuer une autre ligne de découpe prévue dans le programme de coupe (P).
